# EUROPEAN PATENT APPLICATION

(11) **EP 4 482 098 A1**
(43) Date of publication of application: **25.12.2024**
(21) Application number: 23180812.2
(22) Date of filing: 22.06.2023
(51) Int. Cl.: H04L 41/044, H04L 41/14, H04L 41/147

(54) **DATA ANALYTICS IN RESPECT OF INFRASTRUCTURE NETWORK OR SYSTEM**

(71) Applicant: Koninklijke KPN N.V., 3072 AP Rotterdam (NL)
(72) Inventor: Tuinhof, Denice Jocelyn, 1079 NT Amsterdam (NL); Pappot, Edo, 2582 VZ Den Haag (NL)
(74) Representative: Wuyts, Koenraad Maria

(57) **Abstract**

A system and method are provided to system for performing data analytics in respect of an infrastructure network or system. For that purpose, a plurality of microservices is provided, wherein a respective microservice is configured to access input data, execute a data processing task using the input data to obtain a data processing result, and output the data processing result as output data. The data analytics are performed using the plurality of microservices and by arranging and operating the plurality of microservices in a hierarchy, wherein the hierarchy comprises at least two levels and wherein microservices in a first level of the hierarchy are configured to process the operational data of the infrastructure network or system, and microservices in a second level of the hierarchy are configured to process data processing results of the first subset of microservice. The organization of the plurality of microservices into a hierarchy in which at each level microservices are tasked with more complex data processing tasks may allow more complex data analytics questions to be answered.

## Description

### TECHNICAL FIELD

The invention relates to a system and computer-implemented method for performing data analytics in respect of an infrastructure network or system. The invention further relates to a computer-readable medium comprising data for causing a processor system to perform the computer-implemented method.

### BACKGROUND

The operation of infrastructure networks or systems, such as telecommunications networks, electrical grids, gas distribution networks, water supply systems, sewer systems, a public transit system, etc, has grown considerably complex in recent years. As these networks and systems continue to evolve, they have grown to encompass an almost overwhelming number of physical and virtual components. Each of these components interacts in nuanced, interdependent ways, contributing to the multi-layered nature of modern infrastructure. This complexity brings about substantial challenges in effectively managing and optimizing network or system operations.

The implementation of data analytics has emerged as a compelling approach to manage and optimize such infrastructure network or system operations. By applying data analytics, valuable insights can be garnered from the vast arrays of operational data available in infrastructure networks and systems. These insights have the potential to significantly improve operations. However, current data analytics in the field of infrastructure networks and systems generally rely on heuristic principles and focus on discrete segments of an infrastructure network or system and therefore fail to provide an overarching perspective.

The concept of a 'Digital Twin' [1] has been gaining momentum across diverse sectors. Originally conceived within the context of space travel and aircraft simulations, the digital twin is essentially a digital replica of a real-life system or object. This concept allows for simulations, forecasts, and various other data analytics to be conducted on the digital model without disrupting operations of its real-life counterpart.

In the field of infrastructure networks or systems, the digital twin appears as a promising tool to address the aforementioned complexities. By creating a digital duplicate of an infrastructure network or system, operators may simulate behaviours, conduct offline adaptations, extract insights, and make structural changes to enhance the real-life network or system. However, despite the potential advantages of this approach, the implementation of digital twins in infrastructure networks or systems is still in its nascent stages. Existing implementations are limited and are primarily focused on specific problems, such as network load forecasting and signal packet simulations in the example of a telecommunications networks.

It would be desirably to enable data analytics to be performed in respect of an infrastructure network or system in a more comprehensive manner.

### References

[1] Grieves, M., & Vickers, J. (2017). Digital twin: Mitigating unpredictable, undesirable emergent behaviour in complex systems. In Transdisciplinary perspectives on complex systems (pp. 85-113). Springer, Cham.

### SUMMARY

In accordance with a first aspect of the invention, a computer-implemented method is provided for performing data analytics in respect of an infrastructure network or system. The method may comprise:
providing a database system which may comprise or provide access to operational data of the infrastructure network or system;
providing a plurality of microservices, wherein a respective microservice may be configured to:
   - access input data;
   - execute a data processing task using the input data to obtain a data processing result;
   - output the data processing result as output data;
performing the data analytics using the plurality of microservices and by arranging and operating the plurality of microservices in a hierarchy, wherein the hierarchy may comprise at least two levels and wherein:
   - microservices in a first level of the hierarchy may be configured to process the operational data of the infrastructure network or system; and
   - microservices in a second level of the hierarchy may be configured to process data processing results of the first subset of microservices.

In accordance with a further aspect of the invention, a transitory or non-transitory computer-readable medium is provided which may comprise data representing a computer program, the computer program comprising instructions for causing a processor system to perform the above computer-implemented method.

In accordance with a further aspect of the invention, a system may be provided for performing data analytics in respect of an infrastructure network or system. The system may comprise:
a database subsystem, wherein the database system may comprise or provide access to operational data of the infrastructure network or system;
a processor subsystem which may be configured to access microservice data defining a plurality of microservices, wherein a respective microservice may be configured to:
   - access input data;
   - execute a data processing task using the input data to obtain a data processing result;
   - output the data processing result as output data;
wherein the processor subsystem may be further configured to perform the data analytics using the plurality of microservices and by arranging and operating the plurality of microservices in a hierarchy, wherein the hierarchy may comprise at least two levels and wherein:
   - microservices in a first level of the hierarchy may be configured to process the operational data of the infrastructure network or system; and
   - microservices in a second level of the hierarchy may be configured to process data processing results of the first subset of microservices.

In accordance with a further aspect of the invention, an infrastructure network or system may be provided comprising the system.

The above measures involve performing data analytics in respect of an infrastructure system or network, such as a telecommunications network, an electrical grid, a gas distribution network, a water supply system, a sewer system, a public transit system, etc. However, for the purpose of illustration, following parts of this specification refer to the example of a telecommunications network, for example a mobile network, e.g., a 5G or next-generation mobile network, or a fixed-line network, e.g., a fibre-optic network, or a combination of mobile and fixed-line networks. This, however, is not a limitation, in that the measures described in this specification equally apply to other types of infrastructure systems or networks, such as the aforementioned electrical grid, gas distribution network, water supply system, sewer system, public transit system, etc.

For a telecommunications network, the data analytics may for example include demand forecasting, quality of service (QoS) analysis, predictive analysis for the purpose of network maintenance, etc. To be able to perform the data analytics in respect of the telecommunications network, operational data of the telecommunications network may be made accessible via a database system. This database system may gather the operational data from across the telecommunications network, e.g., from various physical or virtual components and from local databases. This gathering of operational data may for example involve mirroring the operational data or linking to the operational data. In the latter examples, the database system may be considered to represent an index database or a reference database. The operational data may comprise data generated and used in the day-to-day operation and maintenance of the network, which data may be used in, e.g., network management, performance monitoring, fault monitoring, etc. Examples of operational data in a telecommunications network include, but are not limited to, network traffic data, call detail records, network fault data, quality of service (QoS) metrics, device data, user data, network configuration data, security data, billing and pricing data, service level agreement (SLA) compliance data, etc.

To enable the data analytics in respect of the telecommunications network, a plurality of microservices is provided to carry out data analytics tasks. Such microservices are known per se and may be used to build a large application as a set of modular services, with each service being in principle capable of running independently and carrying out a specific data processing task. These services may typically communicate with each other through well-defined APIs and protocols, allowing for better scalability, ease of deployment, and fault isolation compared to traditional monolithic architectures. The concept of microservices has been acknowledged as a potential approach to constructing a digital twin. However, the inventors have recognized that a challenge may arise when a plurality of microservices is used to jointly address a given data analytics question in respect of a complex system such as a telecommunications network. Namely, microservices may have to cooperate to be able to answer a data analytics question since the operational data is typically low-level "raw" data and a number of processing steps may be needed to obtain an answer to a data analytics question from such raw operational data. Such cooperation may require interactions between microservices, and these interactions may rise exponentially with the number of microservices and thus potentially become unwieldy. In addition, given that microservices may be designed to perform data processing tasks individually, it may be challenging to ensure that the microservices cooperate and that no conflicting objectives arise between individual microservices.

In accordance with the above measures, the microservices may be structured in a hierarchical manner in that microservices at a base level of the hierarchy may perform base level data processing tasks on the raw operational data and generate data processing results which summarize or otherwise gather insights from the operational data. These data processing results may then be further processed by microservices in a second level of the hierarchy to again summarize or otherwise gather insights from the data processing results from the first level. In a hierarchy of more than two levels of microservices, the above process may be repeated iteratively until arriving at a topmost level, which may be a second, third, fourth, etc. level.

By organizing the microservices in such a hierarchy and by processing data hierarchically, starting from the raw operational data at the base level, the microservices at successively higher levels may carry out higher-order data processing tasks. For example, on the base level, microservices may perform a primary or lowerorder data processing task, while microservices on a higher level may have more challenging data processing tasks in that the tasks may have a larger scope or a more challenging objective. These more challenging tasks may however be completed given that the base level microservices may have already performed individual data processing tasks of which the results may be used by the higher-level microservices to complete their data processing tasks. For example, a base level microservice may fulfil more straightforward tasks such as finding anomalies, forecasting the load on the network, and root cause analysis. A second level microservice may use the data processing results from the base level microservices to perform a more complex task. For example, based on detected anomalies in the network, a forecast of the network load and a root cause analysis of specific problems, a level II microservice may predict outages that will take place, where such outages will take place, etc. In addition, by organizing the data communication to be primarily or in some cases even exclusively top-down and bottom-up, e.g., from a lower level microservice to a higher level microservice and vice versa, instead of microservices being able to freely communicate amongst themselves, the number of interactions between microservices may be limited and/or controlled, which may improve efficiency. Accordingly, the microservices and the database system may together function as a digital twin of the telecommunications network as they enable data analytics to be performed in respect of the network without interrupting network operations.

Advantageously, the use of the abovementioned hierarchy of microservices may promote uniformity by centralizing data and reducing redundant tasks within a telecommunication network. By employing a common data foundation in form of a database system, a single source of truth may be ensured. In the hierarchy of microservices, each microservice may further enrich data stored in the database system. Such a structured configuration may enable higher intelligence, facilitating network-wide analyses. Lower-level microservices may handle raw data, while higher-level microservices may employ enriched data or even multiply enriched data.

In an embodiment, the method may further comprise, and the processor subsystem may be further configured for, arranging microservices in a third level of the hierarchy, wherein the microservices in the third level of the hierarchy may be configured to process data processing results of the microservices in the second level of the hierarchy. By providing a hierarchy of at least three levels, higher-order data processing tasks may be performed using the plurality of microservices. For example, a third level microservice may combine the output data of second level microservices to obtain a more an analytical view of the architecture of the network, to suggest network optimizations based on knowledge of where, how, and when incidents occur, etc.

In an embodiment, a respective microservice may be configured to receive a data processing request from a microservice in a higher level of the hierarchy, and wherein the data processing request may indicate one or more boundary conditions and/or parameters for the data processing task to be executed by the respective microservice. A respective microservice may be configured, e.g., by way of programming or by having been trained for that purpose, to perform a certain type of data processing task. For example, a microservice may be configured to perform network traffic predictions, another microservice may be configured to perform anomaly detection, etc. Nevertheless, the specifics of a data processing task may remain configurable. For example, it may be configurable for which time and/or day to perform the network traffic prediction, for which part of the network, for which type of traffic, etc. In accordance with the above measures, such specifics of a data processing task may be specified by a microservice in a higher level of the hierarchy, for example in the next level of the hierarchy. In particular, a higher-level microservice may send a data processing request to a lower-level microservice and via the data processing request indicate the specifics of the data processing task, for example by defining one or more boundary conditions or parameters of the data processing task. The receipt of the data processing request may trigger the lower-level microservice to perform the data processing task as indicated by the data processing request. This way, the microservices at a lower level of the hierarchy may be controlled by microservices at a higher level, and when applied to all levels, may lead to a centralization of control which in turn may reduce unnecessary interactions and reduce or avoid conflicting objectives arising between individual microservices. Moreover, a higher-level microservices tasked with a data processing task may control one or more lower-level microservices to assist in carrying out its data processing task, for example by instructing the lower-level microservices to perform more elementary data processing tasks which contribute to the completion of its data processing task. In other words, there may be two distinct processes involved in the data communication between microservices, which may be considered to represent a task pipeline and a data pipeline. The task pipeline may encompass microservices residing at the second level or higher, which microservices may be designed to execute specific tasks, such as performing network simulations. A microservice at this level, however, may be unable to accomplish its task solely with the data it may retrieve from the database system. Consequently, the microservice may involve further microservices at a lower level, e.g., at the first level, to perform their respective tasks. These lower-level microservices may provide supplementary data to the higher-level microservice, thereby enabling said microservice to complete its task. Notably, the path of task execution may be hierarchical and cascades from top to bottom. Microservices situated at lower levels may perform less complex and intelligent tasks compared to those at higher levels.

This way, answers to comprehensive data analytics questions may be provided, which may otherwise not be answerable by individual microservices or a plurality of microservices which are organized non-hierarchically, e.g., in a decentralized distributed manner.

In an embodiment, the respective microservice may be configured to, in order to execute the data processing task:
- generate a further data processing request for a microservice in a lower level of the hierarchy; and
- use the data processing result of the microservice in the lower level of the hierarchy as input data for the data processing task.

When a microservice receives a data processing task, it may determine which more elementary data processing tasks are to be performed so as to complete its data processing task and request lower-level microservices to assist in the completion of its data processing task by performing these more elementary data processing tasks. In accordance with the above measures, this may be done repeatedly at each level or at least at a subset of the levels of the hierarchy.

In an embodiment, the respective microservice may be configured to generate further data processing requests for, and use the data processing results of, two or more microservices in the lower level of the hierarchy.

In an embodiment, respective microservices in the hierarchy may be configured to execute different types of data processing tasks. Respective microservices may be configured to perform a specific type of data processing request, e.g., by way of programming or by having been trained for that purpose. This way, individual microservices may be specialized in carrying out specific types of data processing requests while the combination of specialities across the plurality of microservices enable more generalized or system-level data processing tasks to be performed, e.g., which concern the overall functioning and optimization of the telecommunications network rather than specific aspects of the network.

In an embodiment, a microservice at a topmost level of the hierarchy may be configured to receive a data analytics question, and the method may comprise, and the processor subsystem may be configured for, using the plurality of microservices to:
- decompose the data analytics question into a series of lower-level data processing tasks designed for microservices at a next subordinate level within the hierarchy;
- iteratively perform said decomposition across successive lower levels until reaching the first level of the hierarchy, wherein the microservices at the first level process the operational data of the telecommunications network pertinent to addressing the data analytics question;
- propagate the data processing results from the first level upward through the hierarchy to enable the microservice at the topmost level of the hierarchy to output a data processing result to answer the data analytics question.

The plurality of microservices may be used to provide an answer to a highlevel data analytics question by decomposing the data analytics question, which may be received by a topmost microservice, into lower level, more elementary tasks for microservices at the level below, and repeating this process until arriving at the base level at which microservices process operational data which is needed to answer the data analytics question. The data processing results at the base level may be propagated upwards through the hierarchy and used as input to more complex, higher-level data processing tasks until arriving at the topmost level to provide the answer to the data analytics question. Such upward propagation of the data may comprise a microservice storing its data processing result in the database system, e.g., as enriched data, and a higher-level microservice accessing the data processing result from the database system. In other words, the data pipeline may not adhere to a hierarchical structure. Instead, each microservice may have access to the database system and may both store data in and retrieve data from the database system. In case where the data stored in or made accessible by the database system is inadequate to perform a data processing task, one or more lower-level microservices may be tasked with enriching the data. This way, the plurality of microservices may be used to jointly provide an answer to a data analytics question, namely by progressively breaking down the data analytics question into smaller, more manageable tasks to be assigned to microservices and by progressively assembling the results which are generated by the respective microservices to provide an answer to the question.

In general, by storing the data processing results in the database system, instead of directly sending the data processing results to a higher-level microservice, the data processing results may be stored in a more persistent manner, which may enable other microservices to make use of the data processing results, e.g., when addressing another data analytics question. In other words, if a microservice requires certain enriched data which has been previously generated by another microservice, the microservice may directly access and use the enriched data from the data storage. If, however, the microservice requires another type of enriched data which is not yet available from the database system, the microservice may request one or more lower-level microservices to generate the other type of enriched data and to store this enriched data in the database system. The database system may thereby function as a centralized shared data foundation for the operation of the microservices. Advantageously, by using a shared data foundation, redundancy in data enrichment may be reduced or eliminated. Moreover, inconsistencies and conflicts may be reduced or at least made readily apparent when storing the data in the database system.

In an embodiment, the microservices in the first level of the hierarchy may include one or more of:
- a traffic prediction microservice which may be configured to predict traffic in the infrastructure network or system;
- an anomaly detection microservice which may be configured to detect an anomaly in an operation of the infrastructure network or system;
- a topology integration microservice which may be configured to provide an integrated topological view of at least part of the infrastructure network or system, wherein the integrated topological view combines one or more of: a physical topology, a logical topology, and a service topology of the part of the infrastructure network or system;
- an asset lifecycle management microservice which may be configured to determine and/or plan a lifecycle of an asset in the infrastructure network or system;
- a field service management microservice which may be configured to schedule services of field engineers on site;
- a configuration microservice which may be configured to configure software and/or services within the infrastructure network or system; and
- a customer satisfaction microservice which may be configured to determine customer satisfaction based on customer logs and/or customer reviews.

In an embodiment, the microservices in the second level of the hierarchy may include one or more of:
- a simulation microservice which may be configured to simulate an operation of the infrastructure network or system;
- a root cause analysis microservice which may be configured to identify a root cause for an anomaly which is detected in an operation of the infrastructure network or system;
- a cost analysis microservice which may be configured to determine a cost of a change in an operation of the infrastructure network or system;

. a service action microservice which may be configured to determine a service action to address a problem provided as input;

In an embodiment, microservices in a third level of the hierarchy may include one or more of:
- a predictive analytics microservice which may be configured to provide predictive analytics for the infrastructure network or system at a future time instance;
- an impact analysis microservice which may be configured to determine an impact of a change in an operation of the infrastructure network or system;
- an architecture optimalisation microservice which may be configured to determine a change in an architecture of the infrastructure network or system;
- a preventive analytics microservice which may be configured to identify a preventive measure to apply to the infrastructure network or system; and
- a solution analytics microservice which may be configured to compare a current state of the infrastructure network or system with an intended state and to determine one or more actions to bring about the intended state of the infrastructure network or system, for example using root cause analysis.

In an embodiment, a respective microservice may be configured to execute the data processing task using a machine learning algorithm. Machine learning may be well suited for analysis and prediction purposes, for example by an algorithm being trained to detect patterns or anomalies in large datasets. In particular, machine learning may be well suited within the context of telecommunications networks since in telecommunications networks an enormous amount of operational data is available and heuristic principles may fail to adequately detect patterns or anomalies in such data. In some embodiments, different machine learning algorithms may be used for different data processing tasks. For example, a microservice tasked with anomaly detection may make use of unsupervised learning, e.g., based on K-means clustering, while a microservice tasked with network traffic prediction may make use of a machine learning algorithm implementing an autoregressive integrated moving average (ARIMA).

In an embodiment, the machine learning algorithm may be configured to determine, based on the data processing task, which operational data from the database system to use as input data, which output data from another microservice to use as input data, and/or which further data processing task to generate for a microservice in a lower level of the hierarchy. This way, a microservice may be configured to carry out its data processing task autonomously or more autonomously, in that it may learn to identify which input data to use, e.g., in terms of output data from other microservices and/or operational data, which tasks to assign or delegate to other microservices lower in the hierarchy in order to complete its own task, etc. In particular, a microservice may be adaptable in that it may learn over time how to optimize its data processing in terms of which input data and which tasks to assign or delegate.

It will be appreciated by those skilled in the art that two or more of the above-mentioned embodiments, implementations, and/or aspects of the invention may be combined in any way deemed useful.

Modifications and variations of any one of the systems or devices, computer-implemented methods, and/or computer programs, which correspond to the described modifications and variations of another one of these systems or devices, computer-implemented methods, and/or computer programs, or vice versa, may be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 shows a data analysis arrangement which comprises a plurality of microservices and a database system, wherein the data analysis arrangement enables data analytics to be performed in respect of a telecommunications network;
Figs. 2-4 show different examples of data analytics arrangements which each enable data analytics to be performed in respect of a telecommunications network;
Fig. 5 shows a data analytics system which comprises the database system and which is configured to establish a plurality of microservices to perform data analytics in respect of a telecommunications network;
Fig. 6 shows a non-transitory computer-readable medium comprising data;
Fig. 7 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

### Reference signs list

The following list of references and abbreviations is provided for facilitating the interpretation of the drawings and shall not be construed as limiting the claims.
- AC: asset cost
- AD: anomaly detection
- ALM: asset lifecycle management
- AO: architecture optimalisation
- CA: cost analysis
- CT: current traffic
- DPG: government's digital plan
- HU: historical usage
- LT: logical topology
- IA: impact analysis
- IT: internet trends
- NS: network simulation
- NTP: network traffic prediction
- PC: power consumption
- PDA: predictive analytics
- PDI: predictive investments
- PVA: preventive analytics
- PT: physical topology
- RCA: root cause analysis
- SE: system events
- SL: system lifecycle
- ST: service topology
- TI: topology integration

- 1-5: level of hierarchy
- 11-51: microservice

- 60-66: database system
- 70-74: data analytics question
- 80-84: data analytics response
- 90: data analytics arrangement

- 100: data analytics system
- 120: database subsystem
- 140: processor subsystem
- 160: input-output interface subsystem
- 162: input data
- 164: output data

- 200: non-transitory computer-readable medium
- 210: stored data

- 1000: exemplary data processing system
- 1002: processor
- 1004: memory element
- 1006: system bus
- 1008: local memory
- 1010: bulk storage device
- 1012: input device
- 1014: output device
- 1016: network adapter
- 1018: application

### DESCRIPTION OF EMBODIMENTS

The following embodiments are described with reference to performing data analytics in respect of a telecommunications network. This, however, is not a limitation, in the embodiments described in this specification equally apply to other types of infrastructure systems or networks, such as an electrical grid, a gas distribution network, a water supply system, a sewer system, a public transit system, etc.

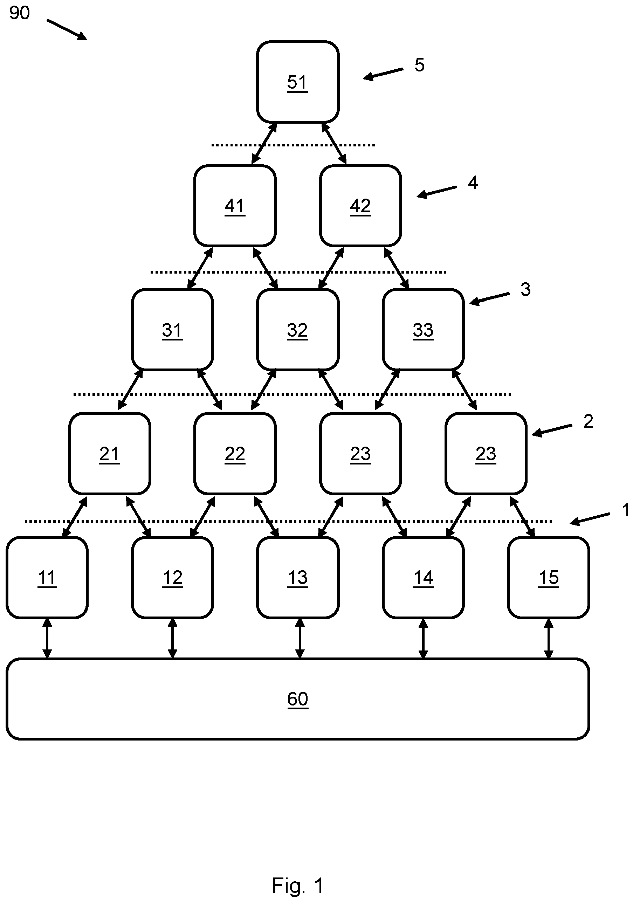

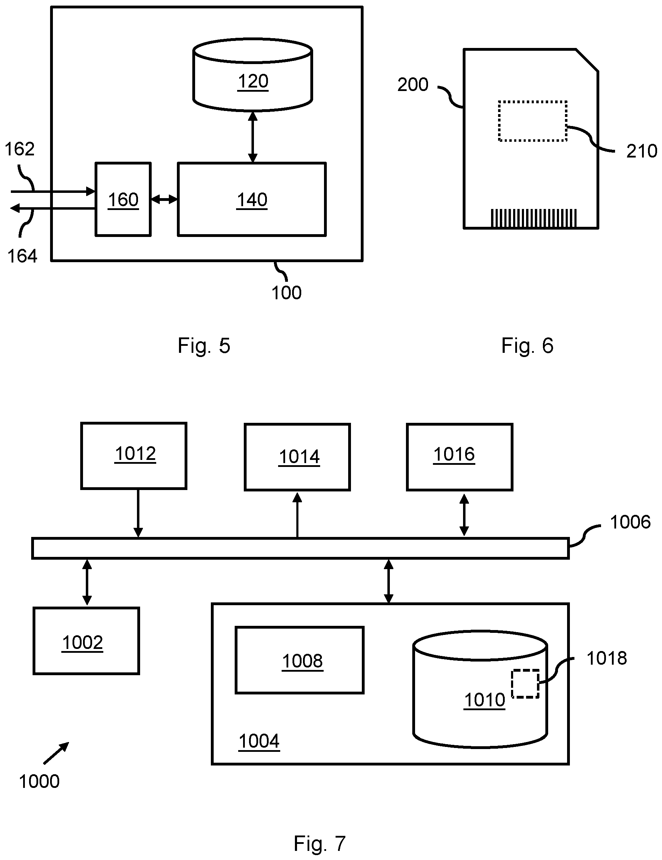

**Fig. 1** shows a data analysis arrangement 90 which comprises a plurality of microservices 11-51 and a database system 60. This data analysis arrangement 90, i.e., the plurality of microservices 11-51 and the database system 60 together, may enable data analytics to be performed in respect of a telecommunications network, for example using a data analytics system as described with reference to Fig. 5 or a corresponding computer-implemented method. The system and method may thus use and operate the data analysis arrangement 90 to perform the data analytics in respect of the telecommunications network, and may in some examples also at least in part establish the data analysis arrangement, e.g., by instantiating microservices, and/or at least in part host the data analysis arrangement, e.g., by hosting the microservices.

The database system 60 may comprise or provide access to operational data of the telecommunications network. For example, the database system 60 may comprise one or more databases which store this operational data, or which contain references to the operational data stored elsewhere in the telecommunications network. In case the database system 60 stores the operational data, this storage may be a primary storage within the telecommunications network or a secondary or tertiary storage, e.g., in form of a mirror or backup of data which is primarily stored elsewhere in the telecommunications network. Examples of operational data which may be stored or accessed include, but are not limited to, the following:
- Network Traffic Data: This data may contain measurements of the utilization of network resources, for example the volume of data transmitted or received over the network, details about the number of packets sent and received, the number of dropped packets, bandwidth utilization, data transfer rates, etc.
- Call Detail Record: This data may contain information about calls made through the network, such as the origin and destination of a call, call duration, time of a call, and any other services used during a call, such as call forwarding or voice mail.
- Network Fault Data: This data may provide information about network errors, failures, or issues. The network fault data may include information about dropped calls, low signal strength, network congestion, equipment failures, interface failures, misconfigurations, protocol failures, etc.
- Quality of Service (QoS) Metrics: This data may be related to the performance of the network, and may include metrics related to latency (delay), jitter (variation in delay), packet loss, etc.
- Device Data: This data may contain information about the devices connected to the network, and may include device types, software versions, locations, IP addresses, connectivity status, etc.
- User Data: This data may contain information about the network's users, such as their usage patterns, preferences, and service subscriptions.
- Network Configuration Data: This data may contain information about the network's topology, such as details of nodes, links, and network equipment (e.g., routers, switches, base stations, etc.).
- Network Equipment Data: This data may contain information about the network's equipment, for example manufacture details, model/type, manufacturing data, maintenance history, physical location, operational requirements, for example in terms of cooling, mean-time-between-failure (MTBF) data, useage data, etc.
- Security Data: This data may contain information about threats, breaches, unauthorized access attempts, and other security incidents within the network.
- Billing and Pricing Data: This data may contain information about tariff plans, customer billing information, call rates, and other related details.
- Service Level Agreement (SLA) Compliance Data: This data may help to measure whether the network is meeting its SLAs. The data may include uptime percentages, downtime incidents, the resolution times for network issues, etc.

A respective microservice may be configured to access input data, execute a data processing task using the input data to obtain a data processing result, and output the data processing result as output data. In other words, a microservice may be assigned a data processing task which operates on input data, and which generates output data. The microservices 11-51 may be arranged in a hierarchy, e.g., at different levels. For example, as shown in Fig. 1, microservices 11-15 may be provided at a first level 1 (also referred to as a 'base level') of the hierarchy, while microservices 21-24 may be provided at a second level 2, microservices 31-33 at a third level 3, microservices 41-42 at a fourth level 4, and microservice 51 at a fifth level 5.

As shown in Fig. 1, the microservices 11-15 in the first level 1 of the hierarchy may directly access the operational data of the telecommunications network as stored in the database system 60. However, although not explicitly shown in Fig. 1, microservices in other levels of the hierarchy may also access the operational data in the database system 60 as well as enriched data which is stored by other microservices in the database system 60. Such enriched data may be generated by a microservice performing a data processing task. In particular, a microservice in an intermediate level of the hierarchy may configured to access the input data for its data processing task by accessing enriched data generated by one or more lower-level microservices, and optionally operational data, both of which may be accessed from the database system 60. By completing its data processing task, the microservice in the intermediate level may generate further enriched data and make the further enriched data available to one or more higher-level microservices, for example storing the further enriched data in the database system 60 and indicating to the higher-level microservices that the further enriched data is available in the database system 60.

While operational data of the telecommunications network may be processed and propagated upwards through the hierarchy, for example via storage in and subsequent retrieval from the database system 60, the data processing tasks may be assigned in a downward manner through the hierarchy. For example, a respective microservice may be configured to receive a data processing request from a microservice in a higher level of the hierarchy. The data processing request, which may take the form of a message, signal, etc., may indicate one or more boundary conditions and/or parameters for the data processing task to be executed by the respective microservice. Different microservices may be configured to perform different types of data processing tasks. By way of the boundary conditions and/or parameters specified in the data processing request, specifics of the data processing task may be configured. For example, a microservice may be configured to perform network simulations and the data processing request may specify the simulation to be performed, e.g., which network part to be simulated, under which conditions, etc.

Based on a received data processing request, a respective microservice may generate one or more further data processing requests for one or more microservices in a lower level of the hierarchy, and use the data processing result of the microservice(s) in the lower level of the hierarchy as input data for its data processing task. In other words, in order to complete its own data processing task, a microservice may request one or more microservices in a lower level of the hierarchy to assist in the data processing task by carrying out further data processing tasks. These further data processing tasks, which may represent subtasks of the aforementioned data processing task, may provide input data which may be needed for the completion of the data processing task. This data communication between microservices is shown in Fig. 1 by respective arrows between microservices. It is noted, however, that while Fig. 1 shows a respective microservice to be in data communication with one microservice in a higher level and two microservices in a lower level, this is merely exemplary, in that a microservice may communicate with any number of microservices in a higher level and any number of microservices in a lower level of the hierarchy. It is noted that in some examples, a microservice may also communicate with microservices at other levels of the hierarchy and/or with the database system 60. In some examples, a microservice may assign tasks to lower-level microservices and report completion of a task to higher-level microservices, while each microservice may have access to the database system 60 to access operational data and data enriched, and in some cases multiply enriched, by other microservices.

Together, the microservices 11-51 may be configured and operated to answer a data analytics question. Such a data analytics question may be a query aimed at extracting insights from the operational data of the telecommunications network. The data analytics question may be structured to guide the data analytics which is performed by the microservices 11-51, e.g., to address a specific goal or issue relating to the telecommunications network. For example, the data analytics questions may pertain to trends, patterns, correlations, predictions, or optimization, in respect of the telecommunications network. In the example of Fig. 1, a microservice at a topmost level of the hierarchy, e.g., the microservice 51 in the fifth level 5 of the hierarchy, may be configured to receive a data analytics question. This question may be interpreted by the microservice 51, and based on said interpretation, one or more lower-level data processing tasks may be assigned to the microservices at a next subordinate level within the hierarchy, e.g., the microservices 41,42 at the fourth level 4 of the hierarchy. Such assignment may involve the microservice 51 generating a data processing request and sending the data processing request to the respective lower-level microservice 41, 42. This process may be repeated iteratively across successive lower levels, in that each microservice may interpret a received data processing request and based on said interpretation assign subtasks to one or more lower-level microservices, until reaching the first level 1 of the hierarchy. There, the microservices 11-15 may process the operational data of the telecommunications network pertinent to their respectively assigned data processing tasks, and thereby pertinent to addressing the overall data analytics question. The data processing results from the microservices 11-15 at the first level 1 may then again be propagated upward through the hierarchy, e.g., by output data of a respective microservice being used as input data by a microservice in a higher level of the hierarchy, to enable the microservice 51 at the topmost level of the hierarchy to output a data processing result to answer the data analytics question. This propagation of data upwards through the hierarchy may involve a microservice at the first level 1 storing its data processing result in the database system 60 and a microservice at a second level 2 accessing the data processing result from the database system 60, which process may be repeated at each following level in the hierarchy. In other words, the data propagation upward through the hierarchy may take place by storage in and subsequent retrieval from the database system.

The data processing result of the microservice 51 may thus represent a response to the query represented by the data analytics question. Such output may, but does not need to be, in human readable form, and may be interpreted by the microservice 51, or by another entity, using natural language processing (NLP) or similar techniques. For example, a large language model (LLM) may be used to translate numerical output data into text or speech. Likewise, the data processing question itself may be in human readable form, and may be interpreted by the microservice 51, or by another entity, for example using the aforementioned LLM. In some examples, the conversion from and to human readable form (e.g., text or speech) may be performed by a separate microservice, for example an intent microservice.

In general, microservices may use artificial intelligence and machine learning techniques to perform their data processing tasks. For example, some, or in some cases even all of the microservices in the hierarchy, may execute their respective data processing tasks using a machine learning algorithm. In other words, a respective data processing task may be carried out or at least controlled by a machine learning algorithm. In some examples, the machine learning algorithm may be configured to learn during operational use which input data to use, which microservices to assign which data processing tasks, etc. For example, a microservice may use a form of continual learning or similar techniques to learn which data path(s) to which microservice(s) are of relevance to carry out its data processing task and strengthen these data paths, e.g., by making more use of the identified microservices. This may also be referred to as 'path strengthening'. For example, the microservice may determine which operational data from the database system to use as input data, which output data from another microservice to use as input data and/or which further data processing task to generate for a microservice in a lower level of the hierarchy. This way, a microservice may dynamically adapt to the available operational data and to the other microservices in the hierarchy. It is noted that the machine learning algorithm used for continual learning may be different from the machine learning algorithm used for completion of its data processing task. In other words, a microservice may use multiple machine learning algorithms for different aspects of its operation, e.g., one algorithm for path strengthening and another algorithm for its data processing task.

With continued reference to the machine learning algorithm, it is noted that such an algorithm may make use of a machine learning model, e.g., a data structure, which may have been trained, i.e., machine learned, for example to perform inference based on the input data, for example in form of classification or regression. Examples of machine learning algorithms and models may include, but not be limited to:
- Supervised learning, e.g., algorithms and models learn from labelled training data. Examples include Support Vector Machines and Linear Regression.
- Unsupervised learning, e.g., algorithms and models which discover patterns in data without guidance. Examples include K-means Clustering and Hierarchical Clustering.
- Reinforcement learning, e.g., algorithms and models which may learn by interacting with an environment, learning from rewards or punishments.
- Deep learning, e.g., a subset of machine learning where neural networks learn from vast amounts of data. Examples include Recurrent Neural Networks (RNNs) for sequential data.
- Decision trees, e.g., a model that may break down a dataset into smaller subsets while incrementally developing associated decision trees.
- Random forests, e.g., an ensemble learning method that constructs multiple decision trees for more accurate and stable predictions.
- Gradient boosting algorithms such as XGBoost and LightGBM which may combine multiple weak learning models to create a strong predictive model.
- Natural language processing, e.g., algorithms and models to understand, generate, and process human language, for example transformers such as BERT and GPT.
- Anomaly detection, e.g., algorithms and models which may be used to identify outliers in the data, such as one-class SVM and isolation forest.
- Dimensionality reduction, e.g., algorithms that reduce the number of input variables in a dataset, like Principal Component Analysis (PCA) and t-SNE.

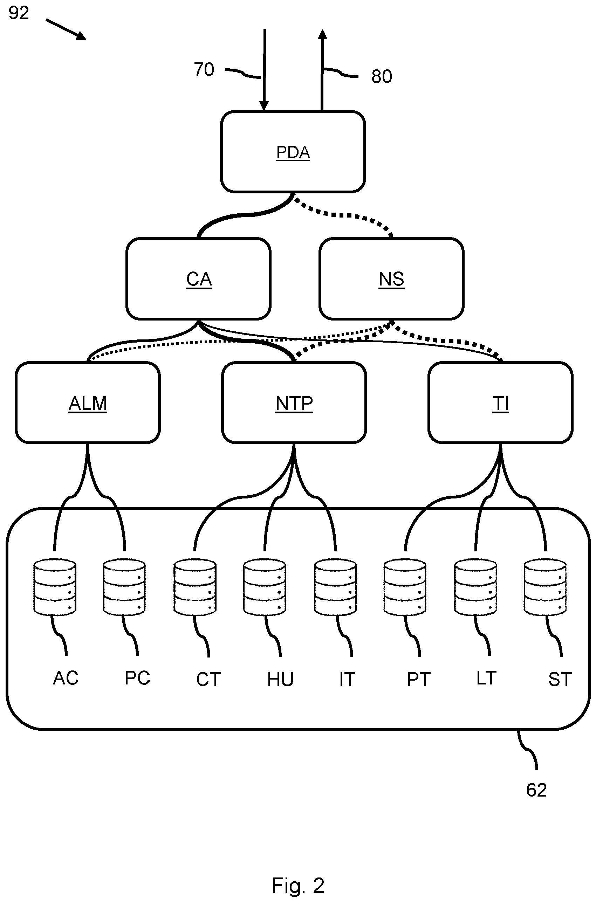

**Figs. 2-4** show different examples of data analytics arrangements. In these examples, reference signs in the form of abbreviations indicate the type of data processing task for which a microservice is configured. In addition, lines between microservices indicate input-output relationships, in that a line between a microservice at a higher level and a microservice at a lower level may indicate that the higher-level microservice sends data processing requests to the lower-level microservice and that in return the lower-level microservice provides data processing results to the higher-level microservice. A thickness of lines may indicate a degree of the relationship, with a thicker line indicating a stronger relationship, e.g., more frequent and/or more recent data communication, and a thinner line indicating a weaker relationship, e.g., less frequent and/or less recent data communication. In these examples, in the database system, individual databases are shown which comprise different types of operational data. It will be appreciated, however, that the operational data may also be differently partitioned over a plurality of databases or may be stored in a single database.

**Fig. 2** shows a first example of a data analytics arrangement 92 which enables data analytics to be performed in respect of a telecommunications network. The data analytics arrangement 92 is shown to comprise a hierarchy of three levels. At the first level of the hierarchy, microservices may be provided for respectively asset lifecycle management ALM, network traffic prediction NTP, and topology integration TI. The asset lifecycle management microservice ALM may for example determine when it is most optimal to change hardware in the telecommunications network. For that purpose, the asset lifecycle management microservice ALM may make use of asset cost data AC and power consumption data PC. The network traffic prediction microservice NTP may make use of current traffic data CT, historical usage data HU, and internet trends data IT to perform network traffic predictions. The topology integration microservice TI may make use of physical topology data PT, logical topology data LT, and service topology data ST to generate an integrated view of (a part of) the telecommunications network. At the second level of the hierarchy, a cost analysis microservice CA and a network simulation microservice NS may be provided which may have relationships of different strengths with the microservices on the first level. The cost analysis microservice CA may be configured to estimate the cost impact of changes in the network, while the network simulation microservices NS may be configured to simulate such changes. At the third level, a predictive analytics microservice PDA may receive input data from the cost analysis CA microservice and from the network simulation microservice NS and may be configured to reason about the impact of network changes based on the cost impact and the network simulation.

This way, in a specific example, the predictive analytics microservice PDA may answer a data analytics question 70 such as "*What is the impact for the next five years, in the amount of traffic* / *cost, if the caches of video streaming service X are reallocated within the telecommunications network?"* with the following response 80, which in this example is rendered in a human-readable form: *"The amount of traffic in the core will increase with Y% and the same amount on the Internet cluster. If the caches are reallocated within the network, the following actions are proposed to maintain the current level of service to customers. Firstly, the existing platforms in the core and Internet access networks are proposed to be replaced with those of vendor Z. Secondly, a port expansion for the next XX years is proposed, as well as Dense wavelength-division multiplexing (DWDM) expansions in the current platform".*

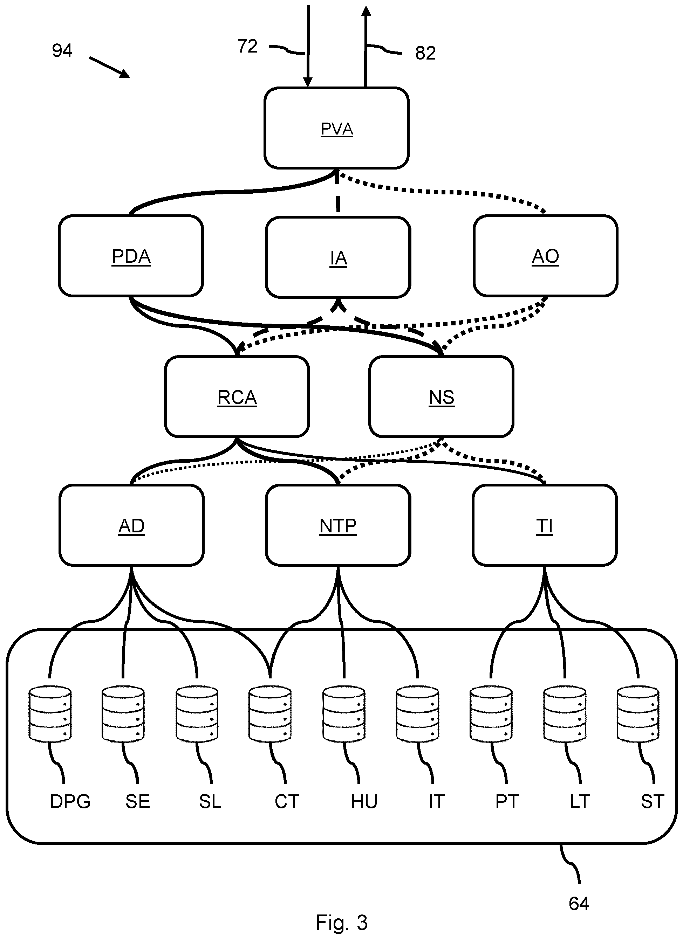

**Fig. 3** shows a second example of a data analytics arrangement 94 which enables data analytics to be performed in respect of a telecommunications network. This data analytics arrangement 94 is shown to comprise a hierarchy of four levels. In the base level or first level of the hierarchy, microservices may be provided for respectively anomaly detection AD, network traffic prediction NTP, and topology integration TI. The anomaly detection microservice AD may for example detect a change in the state of the network or the state of a service provided by the network without an incident in the network or service having taken place yet. For that purpose, the anomaly detection microservice AD may make use of the government's digital plan DPG, system events data SE, and system lifecycle data SL. For example, the system lifecycle data SL and the government's digital plan DPG may provide information to enable the anomaly detection microservice AD to distinguish between anomalies and maintenance taking place. As in the Fig. 2 example, the network traffic prediction microservice NTP may make use of current traffic data CT, historical usage data HU, and internet trends data IT, and the topology integration microservice TI may make use of physical topology data PT, logical topology data LT, and service topology data ST. At the second level, a root cause analysis microservice RCA and a network simulation microservice NS may be provided. Both microservices may make use of input data provided by the aforementioned anomaly detection microservice AD, network traffic prediction microservice NTP, and topology integration microservice Tl. The third level of microservices may comprise a predictive analytics microservice PDA, an impact analysis microservice IA, and an architecture optimalisation microservice AO. The predictive analytics microservice PDA may be configured to reason about where and when an anomaly may occur, the impact analysis microservice IA may be configured to determine the impact of such an anomaly, and the architecture optimalisation microservice AO may be configured to reason about architecture optimization, e.g., how can the telecommunications network architecture be improved to reduce the impact of such an anomaly or to avoid such anomalies from occurring in the first place. At the highest level of the hierarchy, a preventive analytics microservice PVA may be provided which may receive as input the data on when anomalies are predicted take place, their impact, and how to optimize the network to account for such anomalies, and based on this input data determine how to prevent irregularities and incidents from taking place, or more specifically, how to prevent a particular anomaly from occurring.

This way, in a specific example, the preventive analytics microservice PVA may answer a data analytics question 72 such as "Provide *analytics on this specific anomaly and belonging root cause; how can the anomaly be solved and prevented in the future?"* with the following response 82, which in this example is rendered in a human-readable form: *"There is a cable cut between node X and node Y carrying the following six services and 145 customers. The cable cut is 512m from the XYZ location, leaving the building on the south side. Normally, this link should be redundant, but due to a large amount of traffic going over the network, the cable cut caused the network to be overloaded. It thus impacted all the best-efforts services, e.g., Internet* /*streaming* / *teams, etc. An engineer on site may be needed to fix the cut. Based on currently available knowledge, there is no permit to dig in the ground. This incident should be discussed with the government to prevent similar problems in the future".*

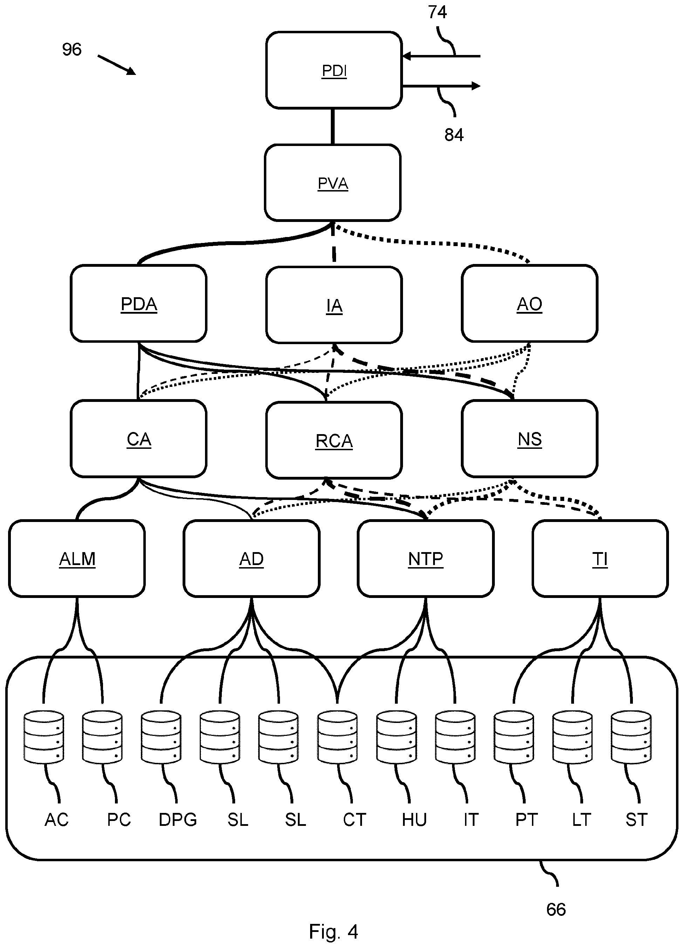

**Fig. 4** shows a third example of a data analytics arrangement 96 which enables data analytics to be performed in respect of a telecommunications network. To be able to answer a data analytics question 74 such as *"How to invest in and optimize the telecommunications network while taking the rise in predicted network traffic for the upcoming years into account?",* the impact that changes have on the telecommunications network and the performance of the network telecommunications may need to be known. Additionally, it may be desirable to understand the cost impact of these changes in the short-term and long-term to enable the microservice at the fifth and highest level of the hierarchy, being a predictive investments microservice PDI, to be able to make predictions in relation to investments. For that purpose, the predictive investments microservice PDI may obtain input from a preventive analytics microservice PVA from the fourth level, as the latter microservice may act a significant source of information for predictive investments, e.g., by provide information on causalities which are foreseen and causalities which are to be prevented in the future. The preventive analytics microservice PVA may require information from a predictive analytics microservice PDA, an impact analysis microservice IA, and an architecture optimization AO, at the third level. At the second level, a cost analysis microservice CA, a root cause analysis microservice RCA and a network simulation microservice NS may be provided. The first level of microservices, including their data sources, is similar to that of Fig. 3 except that additionally an asset lifecycle management microservice ALM may be provided which makes use of asset cost data AC and power consumption data PC. Accordingly, using this hierarchy of microservices, the following response 84 may be provided, which in this example is rendered in a human-readable form *"An investment of X million is needed to change the architecture of the current fixed core. This change is necessary because the existing architecture cannot withstand the network traffic prediction which is foreseen in Y-years time. A separation between our service XX and service YY should be made. Some of the telecommunications network's infrastructure should be placed in the cloud to ensure that it is not needed to copy multiple network parts".*

The aforementioned examples refer to specific data processing tasks which may be carried out by individual microservices. In general, a respective microservice may be configured to carry out any type of data processing tasks which is of relevance to a data analytics question. Many of such data processing tasks themselves may be considered data analytics tasks. For example, microservices may be provided to perform data processing tasks in one or more of the following exemplary domains:
- Predictive maintenance: Predictive analytics may be applied to network equipment data to predict and prevent equipment failures. By analysing historical performance data from routers, switches, towers, and other equipment, algorithms may identify patterns that typically precede a failure. This can trigger maintenance tasks proactively, potentially saving significant costs and minimizing downtime.
- Network optimization: By applying analytics to network usage data, the data processing arrangement may be used to identify bottlenecks and other performance issues. This can help the operator of the network to optimize their network infrastructure, improving service for customers and potentially saving costs.
- Fraud detection: Unusual patterns in call data or billing information can be a sign of fraudulent activity. Data analytics may be used to identify these patterns quickly, reducing the risk and impact of fraud.
- Demand forecasting: Data analytics may be used to anticipate demand for services, such as how much bandwidth will be needed in different locations at different times. This can inform capacity planning and investment decisions.
- Customer segmentation: Data analytics can be used to segment the customer base, providing insights about different groups' behaviours and preferences. This may inform marketing strategies and service offerings.
- Quality of Service (QoS) Analysis: By analysing network performance data, an operator of a telecommunications network may measure and improve their QoS. Measuring and improving QoS may involve examining key parameters such as latency, jitter, and packet loss to ensure they meet acceptable standards.

**Fig. 5** shows a system 100 for performing data analytics in respect of a telecommunications network. The system 100 may therefore also be referred to as a 'data analytics system', and is shown to comprise a database subsystem 120 which comprises or provides access to operational data of the telecommunications network. For example, the database subsystem 120 may comprise the data of the database system as described with reference to Figs. 1-4 or may in some examples correspond to the database system described with reference to Figs. 1-4. In such an example, the database subsystem 120 may itself be a database or comprise one or more databases. In other examples, the database subsystem 120 may be an interface to the database system as described with reference to Figs. 1-4. In such an example, the database subsystem 120 may be a database interface, for example a network interface to one or more network-accessible databases or any other type of database interface.

The system 100 is further shown to comprise a processor subsystem 140 which may be configured to access microservice data defining a plurality of microservices as described elsewhere in this specification, and to perform the data analytics using the plurality of microservices as described elsewhere in this specification. In some examples, the processor subsystem 140 may be configured to instantiate and host the plurality of microservices, in that the processor subsystem 140 may provide an environment in which the microservices may be executed.

In some examples, the system 100 may further comprise an input-output interface subsystem 160 which may be configured to receive input data 162 and to externally output output data 164. For example, the input-output interface subsystem 160 may be a user interface subsystem which comprises a user input interface configured to receive user input, such as a data analytics question, for example as typed-in text or in form of a speech recording. The user interface subsystem may further comprise an output interface configured to render output data. Via the output interface, the system 100 may for example render a response to the data analytics question, for example by displaying the response on a display or by reading the response out loud via a loudspeaker or by sending the response to another system.

In general, the processor subsystem 140 may be embodied by a single Central Processing Unit (CPU), such as a x86, ARM or RISC-V-based CPU, but also by a combination or system of such CPUs and/or other types of processing units. In embodiments where the system 100 is distributed over different entities, e.g., over different servers, the processor subsystem 140 may also be distributed, e.g., over the CPUs of such different servers. In some embodiments, the system 100 may comprise a further data storage, such as a hard drive, a solid-state drive, or an array of such drives, etc., to store data such as the microservices data. In some examples, the system 100 may be implemented by a network node, or by a system of network nodes.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. In general, each functional unit of a respective entity may be implemented in the form of a circuit or circuitry. A respective entity may also be implemented in a distributed manner, e.g., involving different devices or apparatus.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 200 as for example shown in **Fig. 6****,** e.g., in the form of a series 210 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 6 shows by way of example a memory card 200.

While the above measures refer to data analytics being performed in respect of a telecommunications network, the measures described in this specification may apply equally to any other infrastructure system or network, such as an electrical grid, a gas distribution network, a water supply system, a sewer system, a public transit system, such as a rail network, etc.

**Fig. 7** presents a block diagram of an exemplary data processing system 1000 applicable in the embodiments and examples discussed in this specification. This system 1000 may for example implement entities such as the data analytics system and the database system. The system 1000 may feature at least one processor 1002 linked to memory elements 1004 via a system bus 1006, facilitating program code storage in the memory elements. The processor 1002 may execute this program code, accessed from memory elements 1004 through the system bus 1006.

In one perspective, the data processing system 1000 can function as a computer designed to store and/or execute program code. Notably, the data processing system 1000 may be implemented in any form that includes a processor and memory capable of performing the functions outlined in this specification.

The memory elements 1004 may comprise one or more physical memory devices like local memory 1008 and bulk storage devices 1010. Local memory typically refers to random access memory or other non-persistent devices used during actual code execution. In contrast, a bulk storage device could be a hard drive, a solid-state disk, or other persistent data storage devices. The data processing system 1000 may also feature one or more cache memories (not shown) for temporarily storing program code to minimize its retrieval from the bulk storage device 1010 during execution.

Input/output (I/O) devices, represented as input device 1012 and output device 1014, may optionally be connected to the system 1000. Input devices may for example include a microphone, keyboard, mouse, game controller, Bluetooth controller, VR controller, a gesture-based input device, touchscreen, hand tracker, etc. Output devices may include a display, speakers, and the like. These I/O devices may be directly connected to the data processing system or through I/O controllers.

The data processing system 1000 may be connected to other systems, computer systems, remote network devices, and/or remote storage devices via a network adapter 1016. This network adapter may include a data receiver for receiving data and a data transmitter for sending data to these external entities. Examples of network adapters include radios, modems, cable modems, and ethernet cards.

The memory elements 1004 may store an application 1018, executable by the data processing system 1000, in particular by the processor 1002. An operating system can facilitate the execution of the application 1018. Upon executing the application, the data processing system 1000 may be configured to perform one or more operations as detailed elsewhere in this specification.

For example, the data processing system 1000 may represent a data analytics system. In that case, the application 1018 may represent an application that, when executed, configures the data processing system 1000 to perform the functions described with reference to the data analytics system. In another example, the data processing system 1000 may represent an embodiment of a database system. In that case, the application 1018 may represent an application that, when executed, configures the data processing system 1000 to perform the functions described in this specification with reference to the database system.

An abstract for the present specification may read as follows: A system and method are provided to system for performing data analytics in respect of a telecommunications network. For that purpose, a plurality of microservices is provided, wherein a respective microservice is configured to access input data, execute a data processing task using the input data to obtain a data processing result, and output the data processing result as output data. The data analytics are performed using the plurality of microservices and by arranging and operating the plurality of microservices in a hierarchy, wherein the hierarchy comprises at least two levels and wherein microservices in a first level of the hierarchy are configured to process the operational data of the telecommunications network, and microservices in a second level of the hierarchy are configured to process data processing results of the first subset of microservice. The organization of the plurality of microservices into a hierarchy in which at each level microservices are tasked with more complex data processing tasks may allow more complex data analytics questions to be answered.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method for performing data analytics in respect of an infrastructure network or system, comprising:
- providing a database system which comprises or provides access to operational data of the infrastructure network or system;
- providing a plurality of microservices, wherein a respective microservice is configured to:
- access input data;
- execute a data processing task using the input data to obtain a data processing result;
- output the data processing result as output data;
- performing the data analytics using the plurality of microservices and by arranging and operating the plurality of microservices in a hierarchy, wherein the hierarchy comprises at least two levels and wherein:
- microservices in a first level of the hierarchy are configured to process the operational data of the infrastructure network or system; and
- microservices in a second level of the hierarchy are configured to process data processing results of the first subset of microservices.

2. The method according to claim 1, further comprising arranging microservices in a third level of the hierarchy, wherein the microservices in the third level of the hierarchy are configured to process data processing results of the microservices in the second level of the hierarchy.

3. The method according to claim 1 or 2, wherein a respective microservice is configured to receive a data processing request from a microservice in a higher level of the hierarchy, and wherein the data processing request indicates one or more boundary conditions and/or parameters for the data processing task to be executed by the respective microservice.

4. The method according to claim 3, wherein the respective microservice is configured to, in order to execute the data processing task:
- generate a further data processing request for a microservice in a lower level of the hierarchy; and
- use the data processing result of the microservice in the lower level of the hierarchy as input data for the data processing task.

5. The method according to claim 4, wherein the respective microservice is configured to generate further data processing requests for, and use the data processing results of, two or more microservices in the lower level of the hierarchy.

6. The method according to any one of claims 1 to 5, wherein respective microservices in the hierarchy are configured to execute different types of data processing tasks.

7. The method according to any one of claims 1 to 6, wherein a microservice at a topmost level of the hierarchy is configured to receive a data analytics question, and wherein the method comprises using the plurality of microservices to:
- decompose the data analytics question into a series of lower-level data processing tasks designed for microservices at a next subordinate level within the hierarchy;
- iteratively perform said decomposition across successive lower levels until reaching the first level of the hierarchy, wherein the microservices at the first level process the operational data of the infrastructure network or system pertinent to addressing the data analytics question;
- propagate the data processing results from the first level upward through the hierarchy to enable the microservice at the topmost level of the hierarchy to output a data processing result to answer the data analytics question.

8. The method according to any one of claims 1 to 7, wherein the microservices in the first level of the hierarchy include one or more of:
- a traffic prediction microservice configured to predict traffic in the infrastructure network or system;
- an anomaly detection microservice configured to detect an anomaly in an operation of the infrastructure network or system;
- a topology integration microservice configured to provide an integrated topological view of at least part of the infrastructure network or system, wherein the integrated topological view combines one or more of: a physical topology, a logical topology, and a service topology of the part of the infrastructure network or system;
- an asset lifecycle management microservice configured to determine and/or plan a lifecycle of an asset in the infrastructure network or system; and
- a field service management microservice configured to schedule services of field engineers on site;
- a configuration microservice configured to configure software and/or services within the infrastructure network or system; and
- a customer satisfaction microservice configured to determine customer satisfaction based on customer logs and/or customer reviews.

9. The method according to any one of claims 1 to 8, wherein the microservices in the second level of the hierarchy include one or more of:
- a simulation microservice configured to simulate an operation of the infrastructure network or system;
- a root cause analysis microservice configured to identify a root cause for an anomaly which is detected in an operation of the infrastructure network or system;
- a cost analysis microservice configured to determine a cost of a change in an operation of the infrastructure network or system; and
- a service action microservice configured to determine a service action to address a problem provided as input.

10. The method according to any one of claims 1 to 9, wherein microservices in a third level of the hierarchy include one or more of:
- a predictive analytics microservice configured to provide predictive analytics for the infrastructure network or system at a future time instance;
- an impact analysis microservice configured to determine an impact of a change in an operation of the infrastructure network or system;
- an architecture optimalisation microservice configured to determine a change in an architecture of the infrastructure network or system;
- a preventive analytics microservice configured to identify a preventive measure to apply to the infrastructure network or system; and
- a solution analytics microservice configured to compare a current state of the infrastructure network or system with an intended state and to determine one or more actions to bring about the intended state of the infrastructure network or system.

11. The method according to any one of claims 1 to 10, wherein a respective microservice is configured to execute the data processing task using a machine learning algorithm.

12. The method according to claim 11, wherein the machine learning algorithm is configured to determine, based on the data processing task, which operational data from the database system to use as input data, which output data from another microservice to use as input data and/or which further data processing task to generate for a microservice in a lower level of the hierarchy.

13. The method according to any one of claims 1 to 12, wherein the infrastructure network or system is one of: a telecommunications network, electrical grid, a gas distribution network, a water supply system, a sewer system, and a public transit system such as a rail network.

14. A transitory or non-transitory computer-readable medium comprising data representing a computer program, the computer program comprising instructions for causing a processor system to perform the method according to any one of claims 1 to 13.

15. A system for performing data analytics in respect of an infrastructure network or system, comprising:
- a database subsystem, wherein the database system comprises or provides access to operational data of the infrastructure network or system;
- a processor subsystem configured to access microservice data defining a plurality of microservices, wherein a respective microservice is configured to:
- access input data;
- execute a data processing task using the input data to obtain a data processing result;
- output the data processing result as output data;
wherein the processor subsystem is further configured to perform the data analytics using the plurality of microservices and by arranging and operating the plurality of microservices in a hierarchy, wherein the hierarchy comprises at least two levels and wherein:
- microservices in a first level of the hierarchy are configured to process the operational data of the infrastructure network or system; and
- microservices in a second level of the hierarchy are configured to process data processing results of the first subset of microservices.

16. An infrastructure network or system comprising the system according to claim 15.
